(19) Europäisches Patentamt / European Patent Office / Office européen des brevets

(11) **EP 2 761 322 B1**

(12) **EUROPEAN PATENT SPECIFICATION**

(45) Date of publication and mention of the grant of the patent:
**29.03.2017 Bulletin 2017/13**

(51) Int Cl.:
**G01S 5/08** *(2006.01)*     **G01S 5/02** *(2010.01)*
**G01S 3/14** *(2006.01)*     **G01C 9/00** *(2006.01)*

(21) Application number: **11872900.3**

(22) Date of filing: **27.09.2011**

(86) International application number:
**PCT/IB2011/054249**

(87) International publication number:
**WO 2013/045974 (04.04.2013 Gazette 2013/14)**

(54) **USING MEASURED ANGULAR COORDINATES OF AN OBJECT RELATIVE TO A DIRECTIONAL TRANSCEIVER**

VERWENDUNG VON GEMESSENEN WINKELKOORDINATEN EINES OBJEKTS IN RELATION ZU EINEM DIREKTIONALEN SENDER-EMPFÄNGER

UTILISATION DE COORDONNÉES ANGULAIRES MESURÉES D'UN OBJET PAR RAPPORT À UN ÉMETTEUR-RÉCEPTEUR DIRECTIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.08.2014 Bulletin 2014/32**

(73) Proprietor: **Nokia Technologies Oy**
**02610 Espoo (FI)**

(72) Inventor: **RAUTIAINEN, Terhi**
**01520 Vantaa (FI)**

(74) Representative: **Anderson, Oliver Ben et al**
**Venner Shipley LLP**
**200 Aldersgate**
**London EC1A 4HD (GB)**

(56) References cited:
**EP-A1- 0 037 725**     **WO-A1-2004/027446**
**WO-A1-2004/027446**     **WO-A1-2009/056150**
**US-A- 5 455 592**     **US-A1- 2002 180 636**
**US-A1- 2002 180 641**     **US-A1- 2006 167 624**
**US-A1- 2009 195 467**

## Description

### Field

The invention relates to the use of measured angular coordinates of an object relative to a directional transceiver.

### Background

There are a number of known techniques for determining the position of an apparatus using radio frequency signals. Some popular techniques relate to use of the Global Positioning System (GPS), in which multiple satellites orbiting Earth transmit radio frequency signals that enable a GPS receiver to determine its position. However, GPS is often not very effective in determining an accurate position indoors.

Some non-GPS positioning techniques enable an apparatus to determine its position indoors. However, many of these techniques do not result in an accurate position being determined, and others suffer from other disadvantages.

US 2002/180636 discloses a passive ranging/tracking processing method for producing three dimensional position and velocity information of a target.

### Summary

The invention is defined by the claims.

According to a first aspect, this specification describes a method comprising determining angular coordinates of an object relative to a directional transceiver, the directional transceiver being at a first location relative to a reference coordinate system and having an orientation relative to the reference coordinate system, the object being at a second, known location, the angular coordinates being relative to an axis of a local coordinate system, the orientation of the local coordinate system being defined by the orientation of the directional transceiver and the origin of the local coordinate system being at the first location, wherein at least one of the first location and the orientation of the directional transceiver are unknown, the method further comprising calculating the unknown at least one of the first location and the orientation of the directional transceiver using the angular coordinates.

According to a second aspect, this specification describes an apparatus comprising at least one processor and at least one memory, the at least one memory having stored thereon computer-readable instructions which, when executed by the at least one processor, cause the at least one processor to receive signals indicative of angular coordinates of an object relative to a directional transceiver, the directional transceiver being at a first location relative to a reference coordinate system and having an orientation relative to the reference coordinate system, the object being at a second, known location relative to the reference coordinate system, the angular coordinates being measured relative to an axis of a local coordinate system, the orientation of the local coordinate system being defined by the orientation of the directional transceiver and the origin of the local coordinate system being at the first location, wherein at least one of the first location and the orientation of the directional transceiver are unknown, and to calculate the unknown at least one of the first location and the orientation of the directional transceiver using the angular coordinates.

According to a third aspect, this specification describes a non-transitory computer-readable medium having stored thereon computer-readable instructions which, when executed by computing apparatus, cause the computing apparatus to determine angular coordinates of an object relative to a directional transceiver, the directional transceiver being at a first location relative to a reference coordinate system and having an orientation relative to the reference coordinate system, the object being at a second, known location relative to the reference coordinate system, the angular coordinates being relative to an axis of a local coordinate system, the orientation of the local coordinate system being defined by the orientation of the directional transceiver and the origin of the local coordinate system being at the first location, wherein at least one of the first location and the orientation of the directional transceiver are unknown, and to calculate the unknown at least one of the first location and the orientation of the directional transceiver using the angular coordinates.

According to a fourth aspect, this specification describes apparatus comprising means for causing angular coordinates of an object relative to a directional transceiver to be measured, the directional transceiver being at a first location relative to a reference coordinate system and having an orientation relative to the reference coordinate system, the object being at a second, known location, the angular coordinates being measured relative to an axis of a local coordinate system, the orientation of the local coordinate system being defined by the orientation of the directional transceiver and the origin of the local coordinate system being at the first location, wherein at least one of the first location and the orientation of the directional transceiver are unknown, the apparatus further comprising means for calculating the unknown at least one of the first location and the orientation of the directional transceiver using the angular coordinates.

According to a fifth aspect, this specification describes computer-readable code which, when executed by computing apparatus, causes the computing apparatus to perform a method according to the first aspect.

According to a sixth aspect, this specification describes apparatus configured to determine angular coordinates of an object relative to a directional transceiver, the directional transceiver being at a first location relative to a reference coordinate system and having an orientation relative to the reference coordinate system, the object being at a second, known location, the angular coordinates being relative to an axis of a local coordinate system, the orientation of the local coordinate system being defined by the orientation of the directional transceiver and the origin of the local coordinate system being at the first location, wherein at least one of the first location and the orientation of the directional transceiver are unknown, the apparatus being further configured to calculate the unknown at least one of the first location and the orientation of the directional transceiver using the angular coordinates.

## Brief Description of the Figures

For a more complete understanding of example embodiments of the present invention, reference is now made to the following description taken in connection with the accompanying drawings in which:

Figure 1 is a schematic illustration of a directional transceiver and an object, showing both a local coordinate system relative to the directional transceiver and a reference coordinate system;
Figure 2 is an illustrative schematic of a system for enabling the post-installation determination of the location and orientation of a directional transceiver relative to a reference coordinate system;
Figure 3 is a flow chart illustrating methods and operations according to some example embodiments; and
Figures 4A to 4C depict results of computer simulations of methods according to some example embodiments.

## Detailed Description

In the description and drawings, like reference numerals refer to like elements throughout.

Positioning packets of a mobile apparatus can be used to determine and track the position of a mobile apparatus in any area provided with a suitable infrastructure. The mobile apparatus may be for instance a location tag that is to be used for asset tracking. It may alternatively be a more complex device.

Positioning making use of positioning packets can be used for instance for achieving accurate positioning indoors; it may enable a resolution of down to 30 cm. It may be based for instance on low cost Bluetooth Low Energy (BT LE) technology, which is a feature of the Bluetooth 4.0 technology being standardized by the Bluetooth Special Interest Group (SIG).

A positioning system making use of periodic BT LE transmissions can be used with smart devices that locate themselves using a BT LE signal emitted by directional transceivers (DT). This may be referred to as "downlink" mode. DTs are also referred to as beacons. DTs are generally comprised of multiple antennas provided in an array. In downlink mode, the DT may transmit a signal sequentially using several antennas and the smart device receives this using a single antenna. The smart device can calculate its direction vector (or bearing) from the DT if it knows the DT antenna switching pattern of the transmitted signal and the DT antenna array calibration pattern.

Alternatively, a reversed mode of operation can be used. In this "asset tracking" or "uplink" mode, BT LE transceivers that are referred to as tags or location tags emit a signal that is picked up by DTs. The signal is a data packet that enables a DT to identify the tag. The packet may be referred to as a positioning packet. The positioning packet has a form that allows the DT (or another device) to calculate the direction vector (bearing) from the DT towards the tag using a reception of the signal by multiple antennas of the DT. This process is also referred to as "tag update". An HDP (high definition positioning) infrastructure behind the DTs may calculate the position of the tag.

The position of the device may be calculated using the known location and orientation of one DT and a bearing to the tag from the DT, optionally with constraint information. Position may be calculated based on the bearings determined by two, three or more DTs using triangulation. The HDP infrastructure may comprise to this end a positioning server that contains data buffering and position calculation functions. Additionally, the HDP infrastructure may contain various management and application servers.

Location tags supporting the second operating mode can be particularly small and inexpensive, and they may be attached to any desired moving object. A location tag may comprise for instance a battery, some logic in the form of a microcontroller and radio parts. It may be configured to periodically transmit a signal in order to enable determination of positions of the tag. The positions may be used, for instance, for tracking an object to which the tag is associated. Typical frequencies of transmissions and thus of enabled location updates are 1, 10 or 50 times per second.

While the positioning of a mobile apparatus by means of positioning packets of the mobile apparatus can be realized in a positioning system using BT LE, it is to be understood that a similar approach can be used with various other systems and transmission technologies, for instance with a positioning system using active radio frequency identification (RFID).

As described above, in order for the location of the device or tag to be determined, the location and orientation of the directional transceiver (DT) with which the tag or device is communicating must be known. The location and orientation of the directional transceivers may be determined separately for each transceiver during installation of the transceiver. However, typical positioning systems comprise plural directional transceivers. As such, determination of the location and orientation of each individual directional transceiver during installation can be a laborious and slow process. Alternatively, the directional transceivers can be installed at predefined locations and having a predefined orientation. However, not only does this require a very high degree of accuracy during installation, it also requires that suitable installation sites having appropriate locations and orientations are available, and this is not always possible.

Example embodiments described herein allow the location and orientation of a directional transceiver to be determined after installation of the directional transceiver. Consequently, the need for the directional transceivers to be installed at a known location and having a known orientation is may be obviated. In addition, it is also not necessary accurately to measure the orientation and location of the directional transceiver during installation.

Some example embodiments also allow the locations and orientations of multiple directional transceivers in a positioning system to be determined concurrently.

According to some example embodiments, a method is provided for calibrating an in-field positioning system comprising a directional transceiver installed at a first location and having a particular orientation. Initially, immediately after installation, the first location and the orientation, which are relative to a reference coordinate system, are not known.

The method comprises measuring, using the directional transceiver 10, angular coordinates of an object 12 relative to the directional transceiver 10. The object 12 may be, for example, a tag or device as described above. The object 12 is at a second, known location relative to the reference coordinate system. As the orientation of the directional transceiver 10 relative to the reference coordinate system is initially unknown, the angular coordinates of the object 12 are measured relative to an axis of a coordinate system that is local to the directional transceiver 10. The orientation of the local coordinate system, and thus also the orientation of the axis of the local coordinate system, is defined by the orientation of the directional transceiver 10.

The method then comprises using the angular coordinates of the object 12 to calculate the first location and the orientation of the directional transceiver 10 relative to the reference coordinate system.

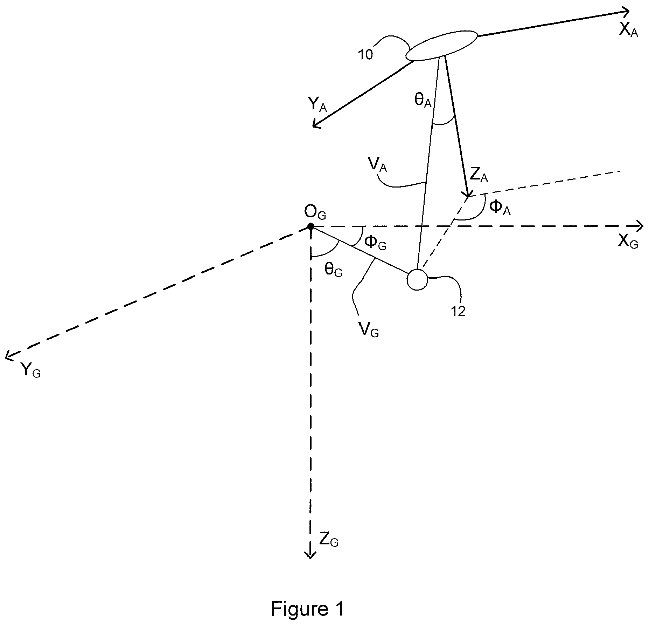

Figure 1 is a schematic illustration of the directional transceiver 10 and the object 12 when determining the location and orientation of the directional transceiver 10 relative to the reference coordinate system. The reference coordinate system is denoted by the three dashed axis, labelled $X_G$, $Y_G$, $Z_G$. The local coordinate system of the directional transceiver 10 is shown by the solid axis labelled $X_A$, $Y_A$, $Z_A$. The vector from the directional antenna to the object 12 is labelled $V_A$. The orientation of the local coordinate system is defined by the orientation of the directional transceiver 10. The origin of the local coordinate system is at the location of the directional transceiver 10.

In the illustration of Figure 1, for ease of understanding, simulation and calculation, the reference coordinate system is defined such that the object 12 is located at $Z_G = 0$.

The angular coordinates of the object 12 relative to the directional transceiver 10 are shown as $\theta_A$ and $\Phi_A$. $\theta_A$ is the angle of the vector $V_A$ with the $Z_A$ axis. $\Phi_A$ is the angle between the projection of the vector $V_A$ in the $X_A$-$Y_A$ plane and the $X_A$ axis respectively.

The vector from the origin of the reference coordinate system $O_G$ to the object 12 is denoted $V_G$. The angular coordinates of the object 12 relative the origin of the reference coordinate system $O_G$ are denoted as $\theta_G$ and $\Phi_G$. $\theta_G$ is the angle of the vector $V_G$ with the $Z_G$ axis. $\Phi_G$ is the angle between the projection of the vector $V_G$ in the $X_G$-$Y_G$ plane and the $X_G$ axis respectively..

Although not shown on Figure 1, the location of the object 12 relative to the reference coordinate system may be generally denoted as $(x_G, y_G, z_G)$. However, as in this example the object 12 is located at $z_G = 0$, the location of the object 12 relative to the reference coordinate system can be written as $(x_G, y_G, 0)$.

The location of the directional transceiver 10 relative to the reference coordinate system may be denoted as $(a_0, b_0, c_0)$.

As discussed above, a method for determining the location and orientation of an installed directional transceiver 10 relative to a reference coordinate system comprises using the directional transceiver 10 to measure the angular coordinates $\theta_A$ and $\Phi_A$ of an object 12 at a known location, $(x_G, y_G, 0)$. Next, the known location of the object 12 and the measured angular coordinates $\theta_A$, $\Phi_A$ are used to calculate the location and orientation of the directional transceiver 10.

The following is a mathematical explanation as to how the location and orientation of the directional transceiver 10 are calculated.

The unit vector of the direction from the directional transceiver 10 to the object 12 can be defined as:

$$r_A^0 = \begin{bmatrix} \sin\theta_A \cos\phi_A \\ \sin\theta_A \sin\phi_A \\ \cos\theta_A \end{bmatrix}$$  EQUATION 1

In the reference coordinate system, the object 12 is seen from the origin $O_G$ in a direction of the unit vector, $r_G^0$:

$$r_G^0 = C_{GA} r_A^0 = \begin{bmatrix} \sin\theta_G \cos\phi_G \\ \sin\theta_G \sin\phi_G \\ \cos\theta_G \end{bmatrix}$$  EQUATION 2

where $C_{GA}$ is a direction cosine matrix which describes the rotation of the local coordinate system relative to the reference coordinate system.

Taking into account that the location of the directional transceiver 10 relative to the reference coordinate system is $(a_0, b_0, c_0)$, the location of the object 12 using the reference coordinate system may be expressed as:

$$r_G = \frac{-c_0}{\cos\theta_G} \begin{bmatrix} \sin\theta_G \cos\phi_G \\ \sin\theta_G \sin\phi_G \\ \cos\theta_G \end{bmatrix} + \begin{bmatrix} a_0 \\ b_0 \\ c_0 \end{bmatrix}$$  EQUATION 3

As discussed above, the reference coordinate system is defined such that the z-coordinate for the object 12 is equal to zero (i.e. $z_G = 0$) and that the z-coordinate of the directional transceiver 10 is measured relative to the position of the object 12. As such, the location of the object 12 can be defined as:

$$r_G = \begin{bmatrix} x_G \\ y_G \\ 0 \end{bmatrix} = \frac{-c_0}{\cos\theta_G} \begin{bmatrix} \sin\theta_G \cos\phi_G \\ \sin\theta_G \sin\phi_G \\ \cos\theta_G \end{bmatrix} + \begin{bmatrix} a_0 \\ b_0 \\ c_0 \end{bmatrix}$$  EQUATION 4

The direction cosine matrix, $C_{GA}$ can be written as follows:

$$C_{GA} = \begin{bmatrix} c_{11} & c_{12} & c_{13} \\ c_{21} & c_{22} & c_{23} \\ c_{31} & c_{32} & c_{33} \end{bmatrix}$$  EQUATION 5

where the element in the *i*th row and the *j*th column, $c_{ij}$ represents the cosine of the angle between the *i*-axis of the reference coordinate system and the *j*-axis of the local coordinate system.

When the reference coordinate system comprises the global coordinate system, the direction cosine matrix, $C_{GA}$, can be also written as:

$$C_{GA} = \begin{bmatrix} N_A \\ E_A \\ G_A \end{bmatrix}$$  EQUATION 6

where $N_A$, $E_A$ and $G_A$ are $[1 \times 3]$ vectors defining orthogonal directions of north, east and gravity in the local coordinate system.

An alternative way to express the direction cosine matrix, $C_{GA}$, is through Euler angles. Euler angles represent three composed rotations that move the local coordinate system to be aligned with the reference coordinate system.

The direction cosine matrix, $C_{GA}$, expressed through Euler angles can be seen below:

$$C_{GA} = \begin{bmatrix} \cos\alpha\cos\gamma & -\cos\beta\sin\gamma + \sin\beta\sin\alpha\cos\gamma & \sin\beta\sin\gamma + \cos\beta\sin\alpha\cos\gamma \\ \cos\alpha\sin\gamma & \cos\beta\cos\gamma + \sin\beta\sin\alpha\sin\gamma & -\sin\beta\cos\gamma + \cos\beta\sin\alpha\sin\gamma \\ -\sin\alpha & \sin\beta\cos\alpha & \cos\beta\cos\alpha \end{bmatrix} \quad \text{EQUATION 7}$$

Finally, putting the above together provides the following equation for the location of the object 12 relative to the reference coordinate system. It is the below equation (Equation 8) that is solved using the known location of the object 12 and the measured angular coordinates of the directional transceiver 10 to allow the location and the orientation of the directional transceiver 10 to be determined.

$$\begin{bmatrix} x_G \\ y_G \\ 0 \end{bmatrix} = \frac{-c_0}{-\sin\alpha\sin\theta_A\cos\phi_A + \sin\beta\cos\alpha\sin\theta_A\sin\phi_A + \cos\beta\cos\alpha\cos\theta_A} \begin{bmatrix} \cos\alpha\cos\gamma & -\cos\beta\sin\gamma + \sin\beta\sin\alpha\cos\gamma & \sin\beta\sin\gamma + \cos\beta\sin\alpha\cos\gamma \\ \cos\alpha\sin\gamma & \cos\beta\cos\gamma + \sin\beta\sin\alpha\sin\gamma & -\sin\beta\cos\gamma + \cos\beta\sin\alpha\sin\gamma \\ -\sin\alpha & \sin\beta\cos\alpha & \cos\beta\cos\alpha \end{bmatrix} \begin{bmatrix} \sin\theta_A\cos\phi_A \\ \sin\theta_A\sin\phi_A \\ \cos\theta_A \end{bmatrix} + \begin{bmatrix} a_0 \\ b_0 \\ c_0 \end{bmatrix}$$

EQUATION 8

In Equation 8 location points $(x_G, y_G)$ are known, and location parameters $(a_0, b_0, c_0)$ and orientation parameters $(\alpha, \beta, \gamma)$ need be solved. Equation 8 is a set of non-linear equations and can be solved in any suitable way. For example, Equation 8 may be solved numerically using one of many available algorithms, such as the LSQNONLIN function which is available in MATLAB® from MathWorks®.

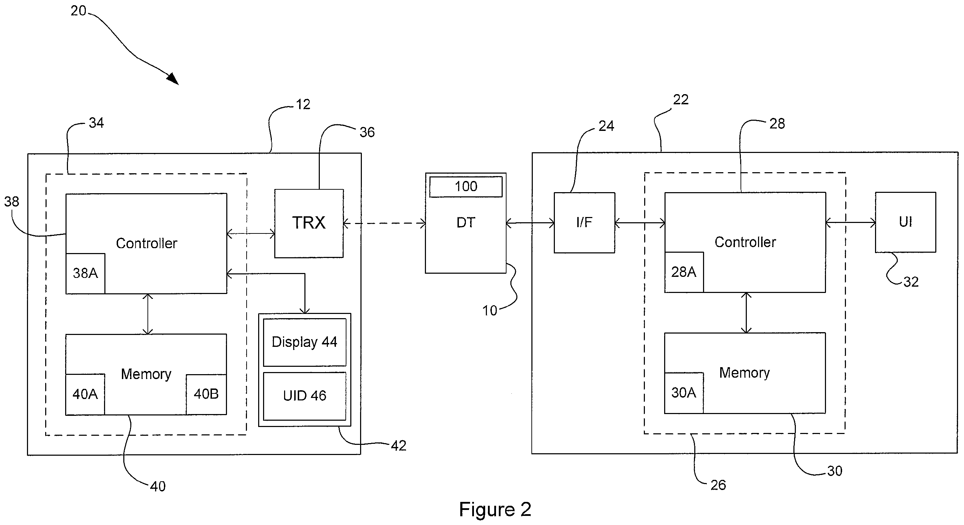

Figure 2 is an illustrative schematic of a system 20 for enabling the post-installation determination of the location and orientation of a directional transceiver 10 relative to a reference coordinate system.

The system 20 comprises the directional transceiver 10. This is in communication with a processing infrastructure 22 which is operable to process signals received from the directional transceiver 10. The processing infrastructure 22 comprises an interface 24 which is operable to receive signals from the directional transceiver 10 and to pass these on to processing apparatus 26. The directional transceiver 10 and the interface 24 may communicate over any suitable wired or wireless connection.

The processing apparatus 26 comprises a controller 28 and at least one memory 30. The controller 28 is operable to receive signals from the directional transceiver 10 via the interface 24 and to process these signals under the control of computer readable instructions 30A stored in the at least one memory. More specifically, the controller 28 is operable to receive signals from the directional transceiver 10 and to determine therefrom angular coordinates $\theta_A$, $\Phi_A$ of a device 12 which is in communication with the directional transceiver 10.

The controller 28 comprises at least one processor 28A (which may be referred to as processing means) which is configured to the execute computer readable instructions 30A stored in the at least one memory. The controller 28 may also comprise one or more application specific integrated circuits (not shown).

The at least one memory 30 may comprise one or more distinct memory modules or media such as, but not limited to ROM, RAM, EEPROM and flash memory.

The processing infrastructure 22 may also comprise a user interface 32 for allowing a user to provide instructions to the infrastructure 22 and/or for outputting information to the user.

The system 20 also comprises the device 12 which is operable to communicate with the directional transceiver 10 using positioning packets. In the description of Figure 1, the device 12 was described as the object 12. The device 12 comprises processing apparatus 34 and a transceiver 36 for communicating with the directional transceiver 10. The transceiver 36 may comprise, for example, a BTLE transceiver.

The transceiver 36 of the device 12 and the directional transceiver 10 may communicate in either of two different modes. These modes are uplink, wherein the transceiver 36 of the device 12 transmits a positioning packet to the directional transceiver 10, or in downlink, wherein the directional transceiver 10 transmits a positioning packet to the transceiver 36 of the device 12. In the uplink mode, the controller 28 of the processing apparatus 26 determines the

angular coordinates $\theta_A$, $\Phi_A$ of the device 12 relative to the local coordinate system. In the downlink mode, the controller 38 of the device 12 determines the angular coordinates $\theta_A$, $\Phi_A$ of the device 12 relative to the local coordinate system. Subsequent to determining the angular coordinates $\theta_A$, $\Phi_A$ of the device 12, the controller 28; 38 that has determine the coordinates is operable to cause the angular coordinates $\theta_A$, $\Phi_A$ to be stored in at least one memory 30; 40.

The processing apparatus 34 of the device 12 comprises a controller 38 and at least one memory 40. The controller 38 is operable under the control of computer readable instructions 40A stored on the at least one memory 40 to control operation of the transceiver 36. More specifically, the controller 38 may be operable to control the transceiver 36 when sending or receiving positioning packets to the directional transceiver 10.

The controller 38 comprises at least one processor 38A (which may also be referred to as processing means) which is operable to execute the computer readable instructions 40A stored on the at least one memory 40. The controller 38 may also comprise one or more application specific integrated circuits (not shown). The memory 40 may comprise one or more distinct memory modules or media which may be, for example, ROM, RAM, EEPROM or flash memory.

The at least one memory 40 of the device 12 may have stored therein a mapping application 40B which includes a map of the area in which one or more directional transceivers, including directional transceiver 10, are installed. The mapping application 40B uses the reference coordinate system, which may be the global coordinate system, based on north, east and gravity.

The device 12 may also comprise a user interface 42 which may comprise a display 44 for allowing the user of the device 12 to view the local map, which is provided when the at least one processor 38A executes the mapping application 40B. The user interface 42 may also include a user input device 12, such as, but not limited to a touch screen, a keypad, a track pad and a track ball. The controller 38 may be operable to cause a map of the area (as provided by mapping application) to be displayed on the display. The controller may be operable also to receive signals from the user input device, the signals being indicative of a user input identifying a current location of the user and the device 12. The controller 38 is responsive to these user inputs to store in the at least one memory 40 the coordinates $(x_G, y_G, 0)$ identified by the user input.

The device 12 may comprise a portable apparatus such as a PDA, a laptop, a mobile telephone, a tablet computer or any other suitable kind of portable device.

In some example systems, the directional transceiver 10 may have associated therewith an inclinometer 100. The inclinometer 100 is operable to measure angles of tilt of the directional transceiver 10 with respect to gravity. The measured angles of tilt of the directional transceiver 10 are passed back to the processing apparatus 26 via the interface 24. The controller 28 is operable to store the measured angles of tilt along with the angular coordinates $\theta_A$, $\Phi_A$ of the device 12 in the at least one memory 30.

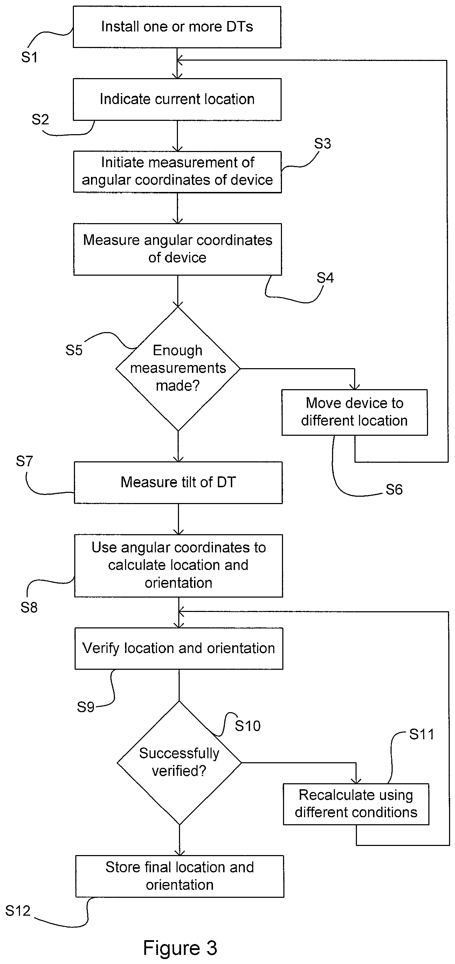

Figure 3 is a flow diagram illustrating a method according to example embodiments of the invention.

In step S1, one or more directional transceivers 10 are installed within an area or environment. Installation of a directional transceiver 10 may comprise positioning the directional transceiver 10 at location from where it is to be used as part of a positioning system for determining the location of devices or tags within the environment or area.

The one or more directional transceivers 10 are then connected in a wired or wireless manner to the processing infrastructure 22. In embodiments in which plural directional transceivers 10 are installed, all of the transceivers 10 may be connected to a single processing infrastructure 22. Alternatively, each directional transceiver 10 may be connected to a separate processing infrastructure 22.

The directional transceivers 10 are installed within the environment without measuring their location and orientation. The coordinates of the locations of each of the one or more directional transceivers 10 are not known. The orientations of the one or more directional transceivers 10 following installation are not known.

In step S2, a user of the device 12 uses the mapping application 40B in conjunction with the user interface 44 of a device 12 to indicate the location of the device 12 relative to the reference coordinate system. The controller 38 of the device 12 is operable to cause coordinates $(x_G, y_G, 0)$ indicative of the location of the device 12 to be stored in the at least one memory 40.

Next, in step S3, the user initiates a measurement by the directional transceiver 10 of the angular coordinates $\theta_A$, $\Phi_A$ of the device 12 from the directional transceiver 10. The measurement may be initiated by the controller 38 of the device causing a positioning packet to be transmitted from the transceiver 36 of the device 12 to the directional transceiver 10 (i.e. uplink mode). Alternatively, the measurement may be initiated by the device 12 communicating with the processing infrastructure 22 associated with the directional transceiver 10, thereby to cause the directional transceiver 10 to transmit a positioning packet to the transceiver 36 of the device 12 (i.e. downlink mode).

Initiation of the measurement may result from the same user input that provided the indication of the location of the device 12.

If more than one directional transceiver 10 is in range of the device 12, step S3 may comprise initiating measurements of the angular coordinates $\theta_A$, $\Phi_A$ of the device 12 in respect of one or more of these installed directional transceivers 10 substantially simultaneously, or in succession. In this way, it is possible for the location and orientation of more than one directional transceiver 10 to be calculated concurrently or substantially simultaneously.

In step S4, if uplink mode has been used (i.e. the positioning packet has been sent from the device 12 to the DT 10), the processing infrastructure 22 responds to the initiation of step S3 by using the directional transceiver 10 to measure the angular coordinates $\theta_A$, $\Phi_A$ of the device 12 relative to the directional transceiver 10. More specifically, the processing apparatus 26 of the processing infrastructure 22 receives signals from the directional transceiver 10 and uses these to determine the angular coordinates $\theta_A$, $\Phi_A$ of the device 12.

Alternatively, if downlink mode has been used (i.e. the positioning packet has been sent from the DT 10 to the device 12), the controller 38 of the device responds to the initiation of step S3 by using the transceiver 36 to measure the angular coordinates $\theta_A$, $\Phi_A$ of the device 12 relative to the directional transceiver 10. More specifically, controller 38 receives signals from the transceiver 36 and uses these to determine the angular coordinates $\theta_A$, $\Phi_A$ of the device 12.

Next, in step S5, it is determined if a sufficient number of measurements have been made. This may simply be a determination as to whether a predetermined number of measurements have been made. The way in which the number of measurements affects the accuracy of the results is discussed below. The number of measurements that are required may depend on the number of unknown parameters that are to be solved (i.e. how many of a0, b0 and c0, and $\alpha$, $\beta$ and $\gamma$ are not known and need to be solved). Any suitable number of measurements may be performed. For example, the number of measurements may be in the range of 5 to 20.

If it is determined in step S5 that more measurements are to be made, in step S6 the user of the device moves to a different location and the method returns to step S2.

If it is determined in step S5 that no more measurements are to be made, the method proceeds to step S7.

In step S7, the tilt of the directional transceiver 10 is measured using the inclinometer 100. The processing apparatus 26 of the processing infrastructure 22 uses the signals received from the inclinometer 100 to determine the tilt of the directional transceiver 10.

In step S8, the measured angular coordinates $\theta_A$, $\Phi_A$ of the device 12 are used to calculate the location and orientation of the directional transceiver 10 relative to the reference coordinate system. More specifically, all the pairs of measured angular coordinates $\theta_A$, $\Phi_A$, together with device location coordinates $(x_G, y_G, 0)$ corresponding to each pair, are inserted into the set of non-linear equations defined by Equation 8 (shown above). The set of non-linear equations is then solved numerically using a suitable algorithm.

Solving the set of non-linear equations produces calculated location parameters (a0, b0, c0) and orientation parameters, or Euler angles ($\alpha$, $\beta$, $\gamma$), of the directional transceiver that fit best with the measured angular coordinates and corresponding device locations.

In embodiments in which the tilt angles of the directional transceiver 10 are measured through gravity vector $G_A$ in local coordinates, some of the orientation parameters, namely $\alpha$ and $\beta$, can be solved using Equations 6 and 7. As such, these values are also inserted into Equation 8 which is then solved.

Next, in step S9, the calculated location and orientation of the directional transceiver 10 are verified. In some example embodiments, the gravity vector $G_A$ obtained using the inclinometer 100 is used to verify the calculated orientation, and consequently the location. More specifically, the measured gravity vector $G_A$ is compared with the third row of direction cosine matrix $C_{GA}$ constructed from orientation parameters ($\alpha$, $\beta$, $\gamma$) and shown in Equation 7. If these two vectors are within a predetermined error range, then the calculated orientation of the directional transceiver 10 can be verified as being correct. In alternative embodiments, the calculated location and orientation of the directional transceiver 10 may be verified by inserting the calculated location and orientation parameters back into Equation 8 along with the measured angular coordinates of the device 12. The location of the device 12 is then calculated. If the calculated location of the device 12 falls within a predetermined error range of the location indicated by the user in step S2, it can be verified that the orientation and location of the directional transceiver 10 have been calculated correctly.

In step S10, it is determined whether or not the calculated location and orientation of the directional transceiver 10 can be successfully verified. In other words, it is determined whether or not the location and orientation of the directional transceiver 10 have been calculated correctly. This is carried out as described above with reference to step S9.

If in step S10 it is determined that the orientation and location of the directional transceiver 10 cannot be successfully verified, for example because the measured gravity vector does not match the third row of the direction cosine matrix $C_{GA}$ of Equation 7, the method proceeds to step S11.

Unsuccessful verification of the calculated location and orientation of the directional transceiver 10 may result from the numerical algorithm that is used to solve the set of non-linear equations defined by Equation 8 converging to a local minimum instead of a global one. This situation is not uncommon with non-linear equations. As such, in step S11, the orientation and location of the directional transceiver 10 may be recalculated using for example one or more of a different algorithm, different initial values and different boundary conditions.

Subsequent to step S11, the method returns to step S9.

If the determination in step S10 is positive, the method proceeds to step S12 in which the correctly verified location and orientation of the directional transceiver 10 relative to the reference coordinate system are stored in a memory for later use. The stored values may then be used in determining locations of devices relative to the reference coordinate system.

The calculation and verification of the location and orientation of the directional transceiver 10 may be carried out by any appropriate processing apparatus. For example, it may be carried out by the processing apparatus 26 of the processing infrastructure 22. In such embodiments, the location of the device 12, as indicated by the user in step S2, may be transmitted in a suitable manner to the processing infrastructure 22. In addition, if downlink mode has been used to determine the angular coordinates $\theta_A$, $\Phi_A$, these may also be transmitted from the device to the processing infrastructure 22. In other example embodiments, the calculation and verification may be performed by the processing apparatus 34 of the device 12. In such embodiments, where uplink mode has been used, the measured angular coordinates $\theta_A$, $\Phi_A$ of the device 12 may be transmitted from the processing infrastructure 22 to the device 12. In other example embodiments, the calculation may be performed by a different processing apparatus that is not part of either the processing infrastructure 22 or the device 12. In some example embodiments, the method may be carried out using more than one processor, some of which may be provided in different devices and/or are at different locations.

In some example embodiments, the operation described above may be semi-automated. In such embodiments, subsequent to initiation in step S3, the user begins to walk at a uniform speed in a straight line. Measurements of the angular coordinates are made at predetermined intervals. Next, when the user changes direction, they mark on the map application the location at which they are changing directions. The location at which the user changes direction made be known as a "turning point". Measurements of the angular coordinates continue to be made. The user may change direction one or more time. Finally, when the user wishes to finish taking measurements, they indicate their final location.

The controller 38; 28 is then operable to use the locations of the start point, the end point and the turning points to interpolate the location at which each measurement of the angular coordinates was made. This location information together with its associated pair of angular coordinates can be used in conjunction with Equation 8 determine the location and orientation of the directional transceiver 10.

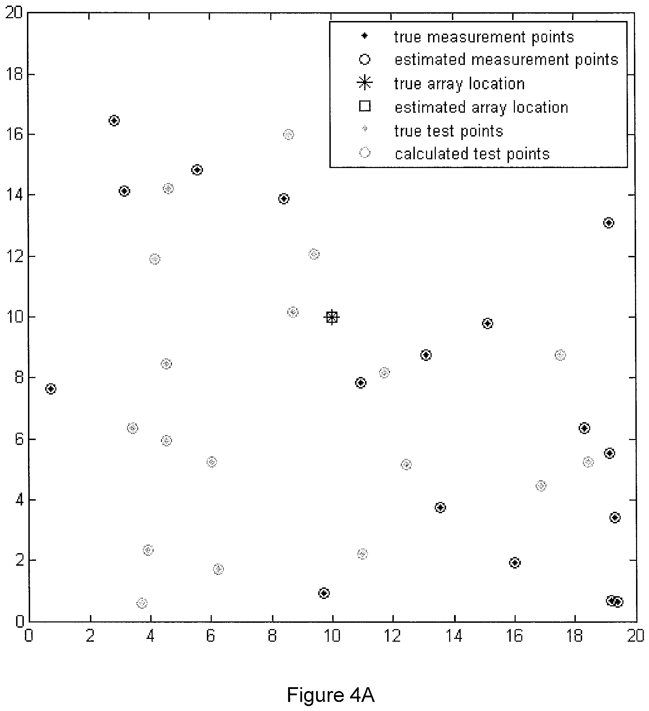

Figures 4A to 4C graphically depict results of simulations carried out based on the above described method.

In each of the simulations, an area or environment size of 20 metres $\times$ 20 metres $\times$ 20 metres is assumed. Twenty randomly generated calibration measurement points (i.e. device locations $x_G$, $y_G$, $z_G$) are used. The directional transceiver 10 is located at the centre of the theoretical environment. As described above, the reference coordinate system is selected such that the calibration measurement level is at z = 0. As the z-axis direction of the reference coordinate system is downwards (as shown in Figure 1), the location of the directional transceiver 10 is given by [10, 10, -10]. The orientation of the directional transceiver 10 is random.

The location of each calibration measurement point is known, and the angular coordinates $\theta_A$, $\Phi_A$ from the directional transceiver 10 to the calibration measurement point can be calculated using geometry.

In the simulation, the known calibration measurement point ($x_G$, $y_G$, 0) and the calculated angular coordinates $\theta_A$, $\Phi_A$ to the measurement point are then inserted into Equation 8, thereby allowing the location parameters ($a_0$, $b_0$, $c_0$) and orientation parameters ($\alpha$, $\beta$, $\gamma$) to be solved.

Each of Figures 4A to 4C includes the following information:

- "estimated array location" which refers to the calculated location of the directional transceiver 10;
- "true measurement points" which refer to the calibration measurement points from which the device 12 initiates measurement of its angular coordinates $\theta_A$, $\Phi_A$ relative to the directional transceiver 10 in order to determine the location and orientation of the directional transceiver 10;
- "estimated measurement points" which refer to the calibration measurement points as obtained by inserting the calculated location and orientation of the directional transceiver 10 and the angular coordinates $\theta_A$, $\Phi_A$ back into Equation 8 (i.e. as obtained when verifying the calculated location and orientation);
- "true test points" which refer to randomly generated test points from which device location measurements were made, and that have not been used in calibration; and
- "calculated test points" which refer to the locations of the true test points as calculated using the location and orientation of the directional transceiver, which were calculated during calibration.

Figure 4A shows the simulation results when the locations of the calibration measurement points are known exactly, without measurement error. It can be seen from Figure 4A that, in a simulation in which no error exists, the above described method allows the location parameters of the directional transceiver 10 to be calculated correctly with no error. In addition, although not shown in Figure 4A, when no errors in calibration measurement points exist, the orientation parameters (e.g. the Euler angles) of the directional transceiver 10 are calculated correctly, with no error.

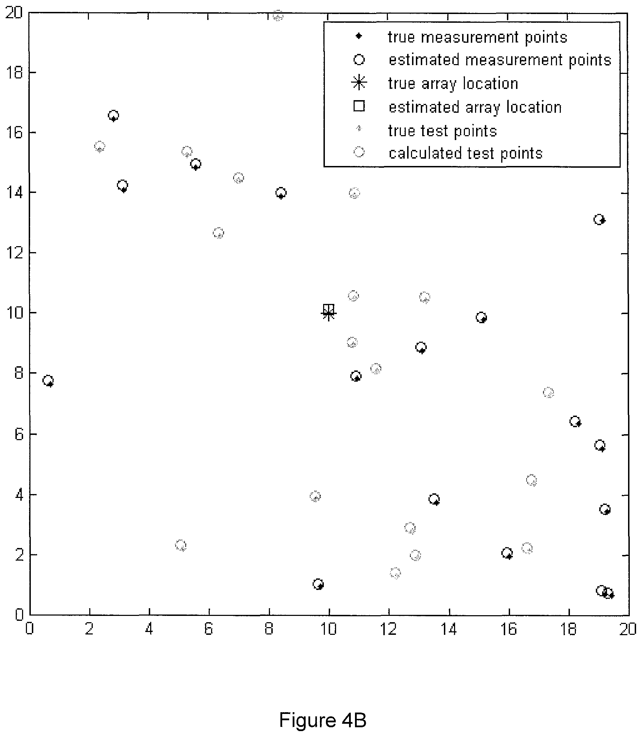

Figure 4B shows the simulation results when the locations of the calibration measurement points contain measurement errors of a standard deviation of 0.2 meters in both the x and y directions, and when all of the location parameters and the orientation parameters are solved using Equation 8 (i.e. when tilt angles from an inclinometer 100 are not used). The known and solved direction cosine matrix and the solved array location can be seen below. The known direction cosine matrix is generated using the known, randomly generated Euler angles with Equation 7. The solved direction cosine matrix is generated using the calculated Euler angle of the directional transceiver 10 with Equation

7:

$$\text{Known } C_{GA} = \begin{bmatrix} 0.7463 & -0.6631 & -0.0583 \\ 0.0256 & 0.1162 & -0.9929 \\ 0.6651 & 0.7395 & 0.1037 \end{bmatrix}$$

$$\text{Solved } C_{GA} = \begin{bmatrix} 0.7431 & -0.6662 & -0.0626 \\ 0.0207 & 0.1163 & -0.9930 \\ 0.6688 & 0.7366 & 0.1002 \end{bmatrix}$$

$$\text{Solved } (a_0, b_0, c_0) = (10.0165, 10.1423, -9.9791)$$

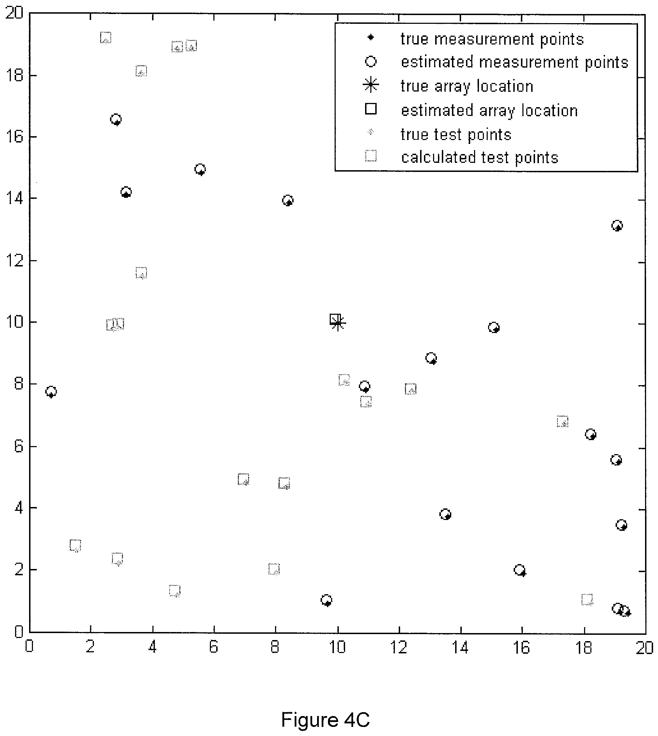

Figure 4C shows the simulation results when the calibration measurement points contain measurement errors with a standard deviation of 0.2 meters in both the x and y directions and when a theoretical inclinometer is used to provide two of the orientation parameters ($\alpha$ and $\beta$), thereby meaning that only four (i.e. $\gamma$ and $a_0$, $b_0$ and $c_0$), and not six, of the orientation and location parameters need to be solved.

Below are the known and calculated values for the direction cosine matrix in addition to the calculated array location:

$$\text{Known } C_{GA} = \begin{bmatrix} 0.7463 & -0.6631 & -0.0583 \\ 0.0256 & 0.1162 & -0.9929 \\ 0.6651 & 0.7395 & 0.1037 \end{bmatrix}$$

$$\text{Solved } C_{GA} = \begin{bmatrix} 0.7464 & -0.6627 & -0.0616 \\ 0.0231 & 0.1184 & -0.9927 \\ 0.6651 & 0.7395 & 0.1037 \end{bmatrix}$$

$$\text{Solved } (a_0, b_0, c_0) = (9.9531, 10.1042, -9.9683)$$

Tables 1 and 2 below illustrate the effect of using an inclinometer on the quality of the results.

TABLE 1

| # Calibration points | E1 (metres) | E2 (metres) | E3 (metres) |
|---|---|---|---|
| 5 | 0.13 | 0.34 | 0.74 |
| 10 | 0.22 | 0.15 | 0.28 |
| 15 | 0.23 | 0.10 | 0.20 |

TABLE 2

| # Calibration points | E1 (metres) | E2 (metres) | E3 (metres) |
|---|---|---|---|
| 5 | 0.20 | 0.18 | 0.18 |
| 10 | 0.21 | 0.13 | 0.13 |

(continued)

| # Calibration points | E1 (metres) | E2 (metres) | E3 (metres) |
|---|---|---|---|
| 15 | 0.24 | 0.09 | 0.09 |

Both tables show, in column E1, the mean error of re-calculated measurement point locations, in column E2, the mean error of newly generated test point locations (i.e. locations not used in calibration), and in column E3, the mean error in the estimated location of the directional transceiver 10. Each table comprises three rows with the first row showing the respective mean errors where five calibration points were used, the second row shows the mean errors where ten calibration points were used, and the third row shows the mean error where twenty calibration points were used.

It can be seen from a comparison of Tables 1 and 2 that, when an inclinometer was used, the location of the directional transceiver 10 can be calculated with a relatively high degree of accuracy even when a fairly small number of calibration points were used. In addition, although not clear from Tables 1 and 2, it was noticed by the inventors that using an inclinometer considerably reduces occurrences in which a local and not a global minimum solution to Equation 8 was found by algorithm.

In the above examples, the device 12 is operable to execute a mapping application 40B, which allows a user to mark the current location, where a calibration measurement is to be made. In other embodiments, however, the device 12 may not have this functionality. Instead, it may just be able to communicate with the directional transceiver to its angular coordinates to be determined. The location of the device may not be indicated by the user, but may instead be a predetermined calibration point, the coordinates of which are already known. The device 12 may be operable to cause the measurement of the angular coordinates to be initiated, for example, in response to a user input. Alternatively, the initiation of measurement may be automatic, for example in response to a timer, with the user carrying the device 12 to a predetermined location at a predetermined time at which the measurement is to be made.

In the above examples, at least one parameter of both the location and orientation of the DT 10 is unknown. However, it will be appreciated that the above-described methods and systems are also applicable in a situation where all of the parameters of one of the location and orientation of the DT 10 are known. This may occur, for example, when a DT 10 is installed at a known pre-selected location, but wherein the orientation is not known. Similarly, it may occur where the orientation is known, for example because the orientation of the surface onto which the DT 10 is to be mounted is known, but the location is unknown, for example, because the installer was free to choose the exact location on the surface. As will be understood, the more parameters that are known, the fewer the number of calibration measurements that may be required in order to achieve a sufficiently accurate determination of the location and/or the orientation.

It should be realized that the foregoing embodiments should not be construed as limiting. Other variations and modifications will be apparent to persons skilled in the art upon reading the present application.

**Claims**

1. A method comprising:

   measuring a plurality of pairs of angular coordinates of an object (12) relative to a directional transceiver (10) using either signals transmitted from the directional transceiver to the object or signals transmitted from the object to the directional transceiver, the directional transceiver being at a first location relative to a reference coordinate system and having an orientation relative to the reference coordinate system, each pair of angular coordinates being measured when the object is at a different one of a plurality of second locations, the angular coordinates being measured relative to an axis of a local coordinate system, the orientation of the local coordinate system being defined by the orientation of the directional transceiver and the origin of the local coordinate system being at the first location, wherein at least one of the first location and the orientation of the directional transceiver are unknown; and
   calculating the unknown at least one of the first location and the orientation of the directional transceiver using the plurality of pairs of angular coordinates and the different second locations, wherein the different second locations used for calculating the unknown at least one of the first location and the orientation of the directional transceiver are known.

2. The method of claim 1, wherein the orientation of the directional transceiver (10) is unknown and the directional transceiver is equipped with an inclinometer, the method comprising:

   measuring the tilt of the directional transceiver using the inclinometer; and

calculating, using the angular coordinates, the tilt and the second known locations, the orientation of the directional transceiver and the first location if the first location was previously unknown.

3. The method of claim 1, wherein the orientation of the directional transceiver (10) is unknown and the directional transceiver is equipped with an inclinometer, the method comprising:

measuring the tilt of the directional transceiver using the inclinometer; and
using the tilt to verify the calculated orientation of the directional transceiver and, if the first location was calculated, to verify the first location.

4. The method of any preceding claim, comprising:

verifying the calculated at least one of the first location and the orientation of the directional transceiver (10) by calculating a value for one of the second locations using the first location, the orientation of the directional transceiver and the measured angular coordinates of the object (12).

5. The method of claim 4, comprising:

if the calculated value for one of the second locations does not fall within an allowed error range from the actual second location, re-calculating the at least one of the first location and the orientation of the directional transceiver (10) using the angular coordinates and the second known locations, the re-calculation being performed differently to the prior calculation of the at least one of the first location and orientation of the directional transceiver.

6. The method of any preceding claim, wherein calculating the at least one of the first location and the orientation of the directional transceiver (10) comprises solving the following equation:

$$
\begin{bmatrix} x_G \\ y_G \\ z_G \end{bmatrix} = \frac{-c_0}{-\sin\alpha\sin\theta_A\cos\phi_A + \sin\beta\cos\alpha\sin\theta_A\sin\phi_A + \cos\beta\cos\alpha\cos\theta_A} C_{GA} r_A^0 + \begin{bmatrix} a_0 \\ b_0 \\ c_0 \end{bmatrix}
$$

where:

$$
C_{GA} = \begin{bmatrix} \cos\alpha\cos\gamma & -\cos\beta\sin\gamma + \cos\beta\sin\alpha\cos\gamma & \sin\beta\sin\gamma + \cos\beta\sin\alpha\cos\gamma \\ \cos\alpha\sin\gamma & \cos\beta\cos\gamma + \sin\beta\sin\alpha\sin\gamma & -\sin\beta\cos\gamma + \cos\beta\sin\alpha\sin\gamma \\ -\sin\alpha & \sin\beta\cos\alpha & \cos\beta\cos\alpha \end{bmatrix};
$$

$$
r_A^0 = \begin{bmatrix} \sin\theta_A\cos\phi_A \\ \sin\theta_A\sin\phi_A \\ \cos\theta_A \end{bmatrix};
$$

$(a_0, b_0, c_0)$ = the coordinates of the first location;
$(x_G, y_G, z_G)$ = the coordinates of one of the second, known locations;
$(\alpha, \beta, \gamma)$ = the Euler angles from the reference coordinate system to the local coordinate system; and
$\theta_A$ and $\Phi_A$ = the angular coordinates of the object (12) relative to the z-axis of the reference coordinate system.

7. The method of any preceding claim, wherein the object (12) is a portable device, the method comprising:

receiving at the portable device, a user input indicative of one of the second locations; and
receiving at the portable device, a user input to initiate measurement of the angular coordinates using the directional transceiver.

8. The method of any one of the preceding claims, comprising:

   automatically measuring the pairs of angular coordinates at predetermined time intervals between a known start time at which the object (12) is at a start location and an end time at which the object is at an end location, the start location being different to the end location; and
   using interpolation to determine the different second locations for each measured pair of angular coordinates using the start location and the end location,

   wherein the object moves at a substantially uniform speed between the start location and the end location and wherein the path along which the object moves between the start location and the end location is substantially straight.

9. The method of any preceding claim, wherein the method is performed substantially concurrently for at least two directional transceivers (10), each being at a different first location.

10. Apparatus comprising:

    means adapted to cause a plurality of pairs of angular coordinates of an object (12) relative to a directional transceiver (10) to be measured using either signals transmitted from the directional transceiver to the object or signals transmitted from the object to the directional transceiver, the directional transceiver being at a first location relative to a reference coordinate system and having an orientation relative to the reference coordinate system, each pair of angular coordinates being measured when the object is at a different one of a plurality of second locations, the angular coordinates being measured relative to an axis of a local coordinate system, the orientation of the local coordinate system being defined by the orientation of the directional transceiver and the origin of the local coordinate system being at the first location, wherein at least one of the first location and the orientation of the directional transceiver are unknown; and
    means adapted to calculate the unknown at least one of the first location and the orientation of the directional transceiver using the plurality of pairs of angular coordinates and the different second locations, wherein the different second locations used for calculating the unknown at least one of the first location and the orientation of the directional transceiver are known.

11. The apparatus of claim 10, wherein the orientation of the directional transceiver (10) is unknown and the directional transceiver is equipped with an inclinometer, the apparatus comprising:

    means adapted to cause the tilt of the directional transceiver to be measured using the inclinometer; and
    means adapted to calculate, using the angular coordinates, the tilt and the second known locations, the orientation of the directional transceiver and the first location if the first location was previously unknown.

12. The apparatus of claim 10, wherein the orientation of the directional transceiver (10) is unknown and the directional transceiver is equipped with an inclinometer, the apparatus comprising:

    means adapted to cause the tilt of the directional transceiver to be measured using the inclinometer; and
    means adapted to use the tilt to verify the calculated orientation of the directional transceiver and, if the first location was calculated, to verify the first location.

13. Computer-readable code which, when executed by computing apparatus, causes the computing apparatus to perform the method of any of claims 1 to 9.

**Patentansprüche**

1. Verfahren, umfassend:

   Messen mehrerer Winkelkoordinatenpaare eines Objekts (12) in Relation zu einem direktionalen Sender-Empfänger (10) entweder anhand von Signalen, die von dem direktionalen Sender-Empfänger an das Objekt gesendet werden, oder Signalen, die vom Objekt an den direktionalen Sender-Empfänger gesendet werden, wobei sich der direktionale Sender-Empfänger an einer ersten Position bezogen auf ein Referenzkoordinatensystem befindet und eine Ausrichtung bezogen auf das Referenzkoordinatensystem aufweist, wobei jedes Winkelkoordinatenpaar gemessen wird, wenn sich das Objekt an einer anderen von mehreren zweiten Positionen befindet, wobei die Winkelkoordinaten bezogen auf eine Achse eines lokalen Koordinatensystems gemessen werden, wobei die Ausrichtung des lokalen Koordinatensystems durch die Ausrichtung des direktionalen Sender-Empfängers definiert ist und der Nullpunkt des lokalen Koordinatensystems an der ersten Position liegt, wobei die erste Position und/oder die Ausrichtung des direktionalen Sender-Empfängers unbekannt sind; und Berechnen der unbekannten ersten Position und/oder Ausrichtung des direktionalen Sender-Empfängers anhand der mehreren Winkelkoordinatenpaare und der verschiedenen zweiten Positionen, wobei die verschiedenen zweiten Positionen, die herangezogen werden, um die unbekannte erste Position und/oder Ausrichtung des direktionalen Sender-Empfängers zu berechnen, bekannt sind.

2. Verfahren nach Anspruch 1, wobei die Ausrichtung des direktionalen Sender-Empfängers (10) unbekannt ist und der direktionale Sender-Empfänger mit einem Neigungswinkelmesser ausgerüstet ist, wobei das Verfahren umfasst:

Messen der Neigung des direktionalen Sender-Empfängers mithilfe des Neigungswinkelmessers; und Berechnen, anhand der Winkelkoordinaten, der Neigung und der bekannten zweiten Positionen, der Ausrichtung des direktionalen Sender-Empfängers und der ersten Position, falls die erste Position zuvor unbekannt war.

3. Verfahren nach Anspruch 1, wobei die Ausrichtung des direktionalen Sender-Empfängers (10) unbekannt ist und der direktionale Sender-Empfänger mit einem Neigungswinkelmesser ausgerüstet ist, wobei das Verfahren umfasst:

Messen der Neigung des direktionalen Sender-Empfängers mithilfe des Neigungswinkelmessers; und Heranziehen der Neigung, um die berechnete Ausrichtung des direktionalen Sender-Empfängers zu verifizieren, und, falls die erste Position berechnet wurde, die erste Position zu verifizieren.

4. Verfahren nach einem der vorstehenden Ansprüche, umfassend:

Verifizieren der berechneten ersten Position und/oder Ausrichtung des direktionalen Sender-Empfängers (10) durch Berechnen eines Wertes für eine der zweiten Positionen unter Heranziehung der ersten Position, der Ausrichtung des direktionalen Sender-Empfängers und der gemessenen Winkelkoordinaten des Objekts (12).

5. Verfahren nach Anspruch 4, umfassend:

falls der für eine der zweiten Positionen berechnete Wert nicht in einen zulässigen Fehlerbereich von der tatsächlichen zweiten Position aus fällt, Neuberechnen der ersten Position und/oder der Ausrichtung des direktionalen Sender-Empfängers (10) anhand der Winkelkoordinaten und der zweiten bekannten Positionen, wobei die Neuberechnung auf andere Weise erfolgt als die vorherige Berechnung der ersten Position und/oder der Ausrichtung des direktionalen Sender-Empfängers.

6. Verfahren nach einem der vorstehenden Ansprüche, wobei das Berechnen der ersten Position und/oder der Ausrichtung des direktionalen Sender-Empfängers (10) das Lösen der folgenden Gleichung umfasst:

$$\begin{bmatrix} x_G \\ y_G \\ z_G \end{bmatrix} = \frac{-c_0}{-\sin\alpha\sin\theta_A\cos\phi_A + \sin\beta\cos\alpha\sin\theta_A\sin\phi_A + \cos\beta\cos\alpha\cos\theta_A} C_{GA} r_A^0 + \begin{bmatrix} a_0 \\ b_0 \\ c_0 \end{bmatrix}$$

wobei:

$$C_{GA} = \begin{bmatrix} \cos\alpha\cos\gamma & -\cos\beta\sin\gamma + \cos\beta\sin\alpha\cos\gamma & \sin\beta\sin\gamma + \cos\beta\sin\alpha\cos\gamma \\ \cos\alpha\sin\gamma & \cos\beta\cos\gamma + \sin\beta\sin\alpha\sin\gamma & -\sin\beta\cos\gamma + \cos\beta\sin\alpha\sin\gamma \\ -\sin\alpha & \sin\beta\cos\alpha & \cos\beta\cos\alpha \end{bmatrix};$$

$$r_A^0 = \begin{bmatrix} \sin\theta_A \cos\phi_A \\ \sin\theta_A \sin\phi_A \\ \cos\theta_A \end{bmatrix};$$

$(a_0, b_0, c_0)$ = Koordinaten der ersten Position;

$(x_G, y_G, c_G)$ = Koordinaten einer der bekannten zweiten Positionen;

$(\alpha, \beta, \gamma)$ = Eulersche Winkel vom Referenzkoordinatensystem zum lokalen Koordinatensystem; und

$\theta_A$ und $\Phi_A$ = Winkelkoordinaten des Objekts (12) in Relation zur z-Achse des Referenzkoordinatensystems.

7. Verfahren nach einem der vorstehenden Ansprüche, wobei das Objekt (12) eine tragbare Vorrichtung ist, wobei das Verfahren umfasst:

Empfangen, an der tragbaren Vorrichtung, einer Benutzereingabe, die eine der zweiten Positionen angibt; und Empfangen, an der tragbaren Vorrichtung, einer Benutzereingabe, um eine Messung der Winkelkoordinaten mittels des direktionalen Sender-Empfängers zu veranlassen.

8. Verfahren nach einem der vorstehenden Ansprüche, umfassend:

automatisches Messen der Winkelkoordinatenpaare in vorbestimmten Zeitintervallen zwischen einer bekannten Startzeit, zu der sich das Objekt (12) an einer Ausgangsposition befindet, und einer Endzeit, zu der sich das Objekt an einer Endposition befindet, wobei die Ausgangsposition von der Endposition verschieden ist; und mittels Interpolation Bestimmen der verschiedenen zweiten Positionen für jedes gemessene Winkelkoordinatenpaar unter Heranziehung der Ausgangsposition und der Endposition, wobei sich das Objekt mit einer im Wesentlichen einheitlichen Geschwindigkeit zwischen der Ausgangsposition und der Endposition bewegt und wobei der Weg, entlang dem sich das Objekt zwischen der Startposition und der Endposition bewegt, im Wesentlichen geradlinig ist.

9. Verfahren nach einem der vorstehenden Ansprüche, wobei das Verfahren im Wesentlichen für wenigstens zwei direktionale Sender-Empfänger (10) gleichzeitig ausgeführt wird, die sich jeweils an einer anderen ersten Position befinden.

10. Vorrichtung, umfassend:

Mittel, das ausgelegt ist zum Veranlassen des Messens mehrerer Winkelkoordinatenpaare eines Objekts (12) in Relation zu einem direktionalen Sender-Empfänger (10), entweder anhand von Signalen, die von dem direktionalen Sender-Empfänger an das Objekt gesendet werden, oder Signalen, die vom Objekt an den direktionalen Sender-Empfänger gesendet werden, wobei sich der direktionale Sender-Empfänger an einer ersten Position bezogen auf ein Referenzkoordinatensystem befindet und eine Ausrichtung bezogen auf das Referenzkoordinatensystem aufweist, wobei jedes Winkelkoordinatenpaar gemessen wird, wenn sich das Objekt an einer anderen von mehreren zweiten Positionen befindet, wobei die Winkelkoordinaten bezogen auf eine Achse eines lokalen Koordinatensystems gemessen werden, wobei die Ausrichtung des lokalen Koordinatensystems durch die Ausrichtung des direktionalen Sender-Empfängers definiert ist und der Nullpunkt des lokalen Koordinatensystems an der ersten Position liegt, wobei die erste Position und/oder die Ausrichtung des direktionalen Sender-Empfängers unbekannt sind; und Mittel, das ausgelegt ist zum Berechnen der unbekannten ersten Position und/oder Ausrichtung des direktionalen Sender-Empfängers anhand der mehreren Winkelkoordinatenpaare und der verschiedenen zweiten Positionen, wobei die verschiedenen zweiten Positionen, die herangezogen werden, um die unbekannte erste Position und/oder Ausrichtung des direktionalen Sender-Empfängers zu berechnen, bekannt sind.

11. Vorrichtung nach Anspruch 10, wobei die Ausrichtung des direktionalen Sender-Empfängers (10) unbekannt ist und der direktionale Sender-Empfänger mit einem Neigungswinkelmesser ausgerüstet ist, wobei die Vorrichtung umfasst:

Mittel, das ausgelegt ist zum Veranlassen des Messens der Neigung des direktionalen Sender-Empfängers mithilfe des Neigungswinkelmessers; und

Mittel, das ausgelegt ist zum Berechnen, anhand der Winkelkoordinaten, der Neigung und der bekannten zweiten Positionen, der Ausrichtung des direktionalen Sender-Empfängers und der ersten Position, falls die erste Position zuvor unbekannt war.

12. Vorrichtung nach Anspruch 10, wobei die Ausrichtung des direktionalen Sender-Empfängers (10) unbekannt ist und der direktionale Sender-Empfänger mit einem Neigungswinkelmesser ausgerüstet ist, wobei die Vorrichtung umfasst:

Mittel, das ausgelegt ist zum Veranlassen des Messens der Neigung des direktionalen Sender-Empfängers mithilfe des Neigungswinkelmessers; und
Mittel, das ausgelegt ist zum Heranziehen der Neigung, um die berechnete Ausrichtung des direktionalen Sender-Empfängers zu verifizieren und, falls die erste Position berechnet wurde, die erste Position zu verifizieren.

13. Computerlesbarer Code, welcher, wenn er von einer Rechenvorrichtung ausgeführt wird, bewirkt, dass die Rechenvorrichtung das Verfahren gemäß einem der Ansprüche 1 bis 9 ausführt.

**Revendications**

1. Procédé comprenant les étapes suivantes :

mesurer une pluralité de paires de coordonnées angulaires d'un objet (12) par rapport à un émetteur-récepteur directionnel (10) en utilisant soit des signaux transmis depuis l'émetteur-récepteur directionnel vers l'objet, soit des signaux transmis depuis l'objet vers l'émetteur-récepteur directionnel, l'émetteur-récepteur directionnel étant à un premier emplacement par rapport à un système de coordonnées de référence et ayant une orientation par rapport au système de coordonnées de référence, chaque paire de coordonnées angulaires étant mesurée lorsque l'objet est à un emplacement différent d'une pluralité de seconds emplacements, les coordonnées angulaires étant mesurées par rapport à un axe d'un système de coordonnées local, l'orientation du système de coordonnées local étant définie par l'orientation de l'émetteur-récepteur directionnel et l'origine du système de coordonnées local étant au niveau du premier emplacement, où au moins une donnée parmi le premier emplacement et l'orientation de l'émetteur-récepteur directionnel est inconnue ; et
calculer l'au moins une donnée inconnue parmi le premier emplacement et l'orientation de l'émetteur-récepteur directionnel en utilisant la pluralité de paires de coordonnées angulaires et les différents seconds emplacements, où les différents seconds emplacements utilisés pour calculer l'au moins une donnée inconnue parmi le premier emplacement et l'orientation de l'émetteur-récepteur directionnel sont connus.

2. Procédé selon la revendication 1, dans lequel l'orientation de l'émetteur-récepteur directionnel (10) est inconnue et l'émetteur-récepteur directionnel est équipé d'un inclinomètre, le procédé comprenant les étapes suivantes :

mesurer l'inclinaison de l'émetteur-récepteur directionnel à l'aide de l'inclinomètre ; et
calculer, en utilisant les coordonnées angulaires, l'inclinaison et les seconds emplacements, l'orientation de l'émetteur-récepteur directionnel et le premier emplacement si le premier emplacement était auparavant inconnu.

3. Procédé selon la revendication 1, dans lequel l'orientation de l'émetteur-récepteur directionnel (10) est inconnue et l'émetteur-récepteur directionnel est équipé d'un inclinomètre, le procédé comprenant les étapes suivantes :

mesurer l'inclinaison de l'émetteur-récepteur directionnel à l'aide de l'inclinomètre ; et
utiliser l'inclinaison pour vérifier l'orientation calculée de l'émetteur-récepteur directionnel et, si le premier emplacement a été calculé, pour vérifier le premier emplacement.

4. Procédé selon l'une quelconque des revendications précédentes, comprenant les étapes suivantes :

vérifier l'au moins une donnée calculée parmi le premier emplacement et l'orientation de l'émetteur-récepteur directionnel (10) en calculant une valeur pour un des seconds emplacements à l'aide du premier emplacement, l'orientation de l'émetteur-récepteur directionnel et les coordonnées angulaires mesurées de l'objet (12).

**5.** Procédé selon la revendication 4, comprenant les étapes suivantes :

si la valeur calculée pour un des seconds emplacements ne se situe pas dans une plage d'erreur autorisée par rapport au second emplacement réel, recalculer l'au moins une donnée parmi le premier emplacement et l'orientation de l'émetteur-récepteur directionnel (10) à l'aide des coordonnées angulaires et des seconds emplacements connus, le nouveau calcul étant réalisé différemment par rapport au calcul préalable de l'au moins une donnée parmi le premier emplacement et l'orientation de l'émetteur-récepteur directionnel.

**6.** Procédé selon l'une quelconque des revendications précédentes, dans lequel calculer l'au moins une donnée parmi le premier emplacement et l'orientation de l'émetteur-récepteur directionnel (10) comprend de résoudre l'équation suivante :

$$\begin{bmatrix} x_G \\ y_G \\ z_G \end{bmatrix} = \frac{-c_0}{-sin\alpha.sin\theta_A.cos\Phi_A + sin\beta.cos\alpha.sin\theta_A.sin\Phi_A + cos\beta.cos\alpha.cos\theta_A} C_{GA} r_A^0 + \begin{bmatrix} a_0 \\ b_0 \\ c_0 \end{bmatrix}$$

où

$$C_{GA} = \begin{bmatrix} cos\alpha.cos\gamma & -cos\beta.sin\gamma + cos\beta.sin\alpha.cos\gamma & sin\beta.sin\gamma + cos\beta.sin\alpha.cos\gamma \\ cos\alpha.sin\gamma & cos\beta.cos\gamma + sin\beta.sin\alpha.sin\gamma & -sin\beta.cos\gamma + cos\beta.sin\alpha.sin\gamma \\ -sin\alpha & sin\beta.cos\alpha & cos\beta.cos\alpha \end{bmatrix} ;$$

$$r_A^0 = \begin{bmatrix} sin\theta_A.cos\Phi_A \\ sin\theta_A.sin\Phi_A \\ cos\theta_A \end{bmatrix} ;$$

où

$(a_0, b_0, c_0)$ - coordonnées du premier emplacement ;
$(x_G, y_G, z_G)$ - coordonnées d'un des seconds emplacements connus ;
$(\alpha, \beta, \gamma)$ = angles d'Euler entre le système de coordonnées de référence et le système de coordonnées local ; et
$\theta_A$ et $\Phi_A$ = coordonnées angulaires de l'objet (12) par rapport à l'axe z du système de coordonnées de référence.

**7.** Procédé selon l'une quelconque des revendications précédentes, dans lequel l'objet (12) est un dispositif portatif, le procédé comprenant les étapes suivantes :

recevoir, au niveau du dispositif portable, une entrée d'utilisateur indicative du second emplacement ; et
recevoir, au niveau du dispositif portable, une entrée d'utilisateur pour initier la mesure des coordonnées angulaires à l'aide de l'émetteur-récepteur directionnel.

**8.** Procédé selon l'une quelconque des revendications précédentes, comprenant les étapes suivantes :

mesurer automatiquement les paires de coordonnées angulaires à des intervalles de temps prédéterminés entre un temps de départ connu auquel l'objet (12) se situe à un emplacement de départ et un temps de fin auquel l'objet se situe à un emplacement de fin, l'emplacement de départ étant différent de l'emplacement de fin ; et
utiliser une interpolation pour déterminer les différents seconds emplacements pour chaque paire mesurée de coordonnées angulaires à l'aide de l'emplacement de départ et de l'emplacement de fin,
où l'objet se déplace à une vitesse sensiblement uniforme entre l'emplacement de départ et de l'emplacement de fin, et où le chemin le long duquel l'objet se déplace entre l'emplacement de départ et de l'emplacement de fin est sensiblement rectiligne.

**9.** Procédé selon l'une quelconque des revendications précédentes, dans lequel le procédé est exécuté sensiblement simultanément pour au moins deux émetteurs-récepteurs directionnels (10), chacun étant à un premier emplacement différent.

**10.** Appareil comprenant :

un moyen adapté pour amener qu'une pluralité de paires de coordonnées angulaires d'un objet (12) par rapport à un émetteur-récepteur directionnel (10) soient mesurées en utilisant soit des signaux transmis depuis l'émetteur-récepteur directionnel vers l'objet, soit des signaux transmis depuis l'objet vers l'émetteur-récepteur directionnel, l'émetteur-récepteur directionnel étant à un premier emplacement par rapport à un système de coordonnées de référence et ayant une orientation par rapport au système de coordonnées de référence, chaque paire de coordonnées angulaires étant mesurée lorsque l'objet est à un emplacement différent d'une pluralité de seconds emplacements, les coordonnées angulaires étant mesurées par rapport à un axe d'un système de coordonnées local, l'orientation du système de coordonnées local étant définie par l'orientation de l'émetteur-récepteur directionnel et l'origine du système de coordonnées local étant au niveau du premier emplacement, où au moins une donnée parmi le premier emplacement et l'orientation de l'émetteur-récepteur directionnel est inconnue ; et
un moyen adapté pour calculer l'au moins une donnée inconnue parmi le premier emplacement et l'orientation de l'émetteur-récepteur directionnel en utilisant la pluralité de paires de coordonnées angulaires et les différents seconds emplacements, où les différents seconds emplacements utilisés pour calculer l'au moins une donnée inconnue parmi le premier emplacement et l'orientation de l'émetteur-récepteur directionnel sont connus.

**11.** Appareil selon la revendication 10, dans lequel l'orientation de l'émetteur-récepteur directionnel (10) est inconnue et l'émetteur-récepteur directionnel est équipé d'un inclinomètre, l'appareil comprenant :

un moyen adapté pour amener que l'inclinaison de l'émetteur-récepteur directionnel soit mesurée à l'aide de l'inclinomètre ; et
un moyen adapté pour calculer, en utilisant les coordonnées angulaires, l'inclinaison et les seconds emplacements, l'orientation de l'émetteur-récepteur directionnel et le premier emplacement si le premier emplacement était auparavant inconnu.

**12.** Appareil selon la revendication 10, dans lequel l'orientation de l'émetteur-récepteur directionnel (10) est inconnue et l'émetteur-récepteur directionnel est équipé d'un inclinomètre, l'appareil comprenant :

un moyen adapté pour amener que l'inclinaison de l'émetteur-récepteur directionnel soit mesurée à l'aide de l'inclinomètre ; et
un moyen adapté pour utiliser l'inclinaison pour vérifier l'orientation calculée de l'émetteur-récepteur directionnel et, si le premier emplacement a été calculé, pour vérifier le premier emplacement.

**13.** Code lisible par ordinateur qui, lorsqu'il est exécuté par l'appareil informatique, amène l'appareil informatique à exécuter le procédé selon l'une quelconque des revendications 1 à 9.

Figure 1

Figure 2

Figure 3

Figure 4A

Figure 4B

Figure 4C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002180636 A